Europäisches Patentamt

European Patent Office

Office européen des brevets

(19)

(11) Veröffentlichungsnummer: **0 129 799**
**B1**

(12) **EUROPÄISCHE PATENTSCHRIFT**

(45) Veröffentlichungstag der Patentschrift:
**18.10.89**

(21) Anmeldenummer: **84106869.5**

(22) Anmeldetag: **15.06.84**

(51) Int. Cl.⁴: **C 08 G 59/40, C 08 G 59/24,**
**C 08 G 18/58, C 08 G 18/79,**
**H 01 B 3/40, H 01 B 3/30,**
**H 02 K 3/30**

(54) Hitzehärtbare Reaktionsharzmischungen.

(30) Priorität: **27.06.83 DE 3323123**

(43) Veröffentlichungstag der Anmeldung:
**02.01.85 Patentblatt 85/1**

(45) Bekanntmachung des Hinweises auf die Patenterteilung:
**18.10.89 Patentblatt 89/42**

(84) Benannte Vertragsstaaten:
**AT CH DE FR GB LI NL SE**

(56) Entgegenhaltungen:
**DE-A- 2 543 386**
**DE-B- 2 655 367**

**PATENT ABSTRACTS OF JAPAN, unexamined applications, Sektion C, Band 1, Nr. 28, 28. März 1977, THE PATENT OFFICE JAPANESE GOVERNMENT, p. 1464 C 76**
**PATENT ABSTRACTS OF JAPAN, unexamined applications, Feld C, Band 7, Nr. 3, Januar 1983, THE PATENT OFFICE JAPANESE GOVERNMENT, p. 22 C 143**

(73) Patentinhaber: **Siemens Aktiengesellschaft, Wittelsbacherplatz 2, D-8000 München 2 (DE)**

(72) Erfinder: **Rogler, Wolfgang, Dr., Geschwister-Scholl-Strasse 4, D-8520 Erlangen (DE)**
Erfinder: **Kretzschmar, Klaus, Dr., im Heuschlag 5, D-8520 Erlangen (DE)**
Erfinder: **Markert, Helmut, Dr., Lohengrinstrasse 17, D-8500 Nürnberg (DE)**
Erfinder: **Piecha, Gerhard, Weissenburger Strasse 1, D-8540 Schwabach (DE)**

## Beschreibung

Die Erfindung betrifft hitzehärtbare Reaktionsharzmischungen, die polyfunktionelle Epoxide, polyfunktionelle Isocyanate und einen Reaktionsbeschleuniger sowie gegebenenfalls übliche Additive und/oder Füllstoffe enthalten, sowie die Verwendung derartiger Reaktionsharzmischungen.

Zur Herstellung thermisch-mechanisch hochwertiger Formstoffe werden in der Elektrotechnik überwiegend säureanhydridhärtbare Epoxidharze als Imprägnier- und Gießharze eingesetzt. Die üblichen Verarbeitungsverfahren für Epoxidharze, wie Vakuumverguß, VPI-Verfahren (Vakuum-Druck-Technik) und spritzgußanaloge Verarbeitung, erfordern dabei Harze mit für die Technik ausreichender Gebrauchsdauer. Die minimale Gebrauchsdauer der Epoxidharze wird von unterschiedlichen Parametern bestimmt, wie Aufbereitung, Vergußzeit, Vergußvolumen und Schichteinteilung; sie kann bis zu einigen Tagen betragen. Durch die Entwicklung sogenannter latenter Reaktionsbeschleuniger konnten – hinsichtlich einer langen Gebrauchsdauer – bei Epoxidharzen große Fortschritte gemacht werden.

Neben zunehmend härteren Anforderungen hinsichtlich der Verarbeitungseigenschaften von Epoxidharzen werden zunehmend auch höhere Anforderungen an die thermisch-mechanische Belastbarkeit der daraus hergestellten Formstoffe gestellt. Dies erfordert aber insbesondere eine verbesserte Temperaturwechselbeständigkeit bei gleichzeitig hoher Wärmeformbeständigkeit.

Bei säureanhydridgehärteten Epoxidharzformstoffen stößt man aber bei ca. 150 °C an eine obere Grenze für die Wärmeformbeständigkeit, wenn gleichzeitig hohe mechanische Eigenschaftswerte und eine gute Temperaturwechselbeständigkeit gefordert werden. Es wurden daher bereits Reaktionsharzmischungen auf der Basis von Polyepoxiden und Polyisocyanaten, sogenannten EP/IC-Harze, entwickelt, die bei der thermischen Härtung in Gegenwart geeigneter Reaktionsbeschleuniger, d.h. Härtungskatalysatoren, Formstoffe mit wärmebeständigen Oxazolidinon- und Isocyanuratstrukturen, sogenannte OX/ICR-Formstoffe, bilden. Die Wärmeformbeständigkeit und auch die Dauerwärmebeständigkeit dieser Reaktionsharzformstoffe läßt sich durch zunehmenden Gehalt an Isocyanuratstrukturen steigern, gleichzeitig nimmt jedoch die Sprödigkeit der Formstoffe zu und die Temperaturwechselbeständigkeit ab.

Aufgabe der Erfindung ist es, hitzehärtbare Reaktionsharzmischungen auf der Basis von polyfunktionellen Epoxiden und polyfunktionellen Isocyanaten bereitzustellen, welche lagerstabil sind, aus gut mischbaren Einzelkomponenten bestehen, eine hohe Gebrauchsdauer – sowohl bei der Aufbereitung als auch bei der Verarbeitung – besitzen und gleichzeitig die Herstellung von Formstoffen erlauben, welche die guten mechanischen Eigenschaften sowie die hohe Temperaturwechselbeständigkeit von Polyurethanstrukturen mit den guten thermischen Eigenschaften von OX/ICR-Strukturen verbinden.

Dies wird erfindungsgemäß dadurch erreicht, daß die Reaktionsharzmischungen als polyfunktionelle Isocyanate Isocyanatvorpolymerisate in Form von Umsetzungsprodukten aus Diphenylmethandiisocyanat und einem Diol oder aus einem Isocyanatgemisch aus Diphenylmethandiisocyanat und Polymethylenpolyphenylisocyanaten mit einer Funktionalität größer 2 und einem Diol enthalten, wobei auf 1 Äquivalent Isocyanat jeweils 0,01 bis 0,35 Äquivalente, vorzugsweise 0,05 bis 0,2 Äquivalente, des Diols entfallen, daß auf 1 Äquivalent Epoxid 0,2 bis 5 Äquivalente Isocyanat entfallen und daß der Reaktionsbeschleuniger ein tert. Amin oder ein Imidazol ist.

Die erfindungsgemäßen Reaktionsharzmischungen, die vorzugsweise bei Temperaturen von Raumtemperatur bis 200 °C vernetzt und gehärtet werden, liefern OX/ICR-Formstoffe, welche Oxazolidinon- und Isocyanuratstrukturen sowie – in untergeordnetem Maße – auch Urethanstrukturen enthalten. Diese Formstoffe weisen ausgezeichnete mechanische Eigenschaften und eine sehr gute Temperaturwechselbeständigkeit bei gleichzeitig hoher Wärmeformbeständigkeit auf.

Die erfindungsgemäßen Reaktionsharzmischungen, welche ein Isocyanatvorpolymerisat – in Form eines Reaktionsproduktes einer Isocyanatverbindung mit einem Diol – enthalten, besitzen eine lange Gebrauchsdauer; sie bestehen darüber hinaus aus gut mischbaren Einzelkomponenten, was für die Verarbeitbarkeit von Vorteil ist. Es ist ferner auch überraschend, daß schon bei einem sehr geringen Gehalt der Harzmischungen an Isocyanatvorpolymerisat OX/ICR-Formstoffe mit ausgezeichneter Flexibilität entstehen.

Bei der Herstellung der Isocyanatvorpolymerisate ist es wesentlich, daß pro Äquivalent Isocyanat (der eingesetzten Isocyanatverbindung bzw. des Gemisches aus Isocyanaten) 0,01 bis 0,35 Äquivalent des Diols eingesetzt werden. Bei einem höheren Diolgehalt der Reaktionsharzmischungen nimmt nämlich einerseits die Wärmeformbeständigkeit der Formstoffe deutlich ab, so daß dann Formstoffe mit technisch bereits auf anderem Weg realisierten Eigenschaften entstehen; andererseits können derartige Reaktionsharzmischungen – wegen einer zu hohen Viskosität – nicht mehr unter Zusatz von Füllstoffen verarbeitet werden.

Es ist bereits versucht worden, durch Reaktionsharzmischungen, welche aus einem Epoxidharz, einem Polyol und einem Isocyanat bestehen, eine Kombination der mechanisch ausgezeichneten Eigenschaften von Polyurethanen mit der hohen Wärmeformbeständigkeit von OX/ICR-Formstoffen zu erreichen (vgl. dazu DE-OS 3 001 637). Derartige ternäre Systeme aus Polyepoxiden, Polyolen und Polyisocyanaten haben jedoch in verarbeitungstechnischer Hinsicht entscheidende Nachteile, da Polyole und Polyisocyanate schon bei niederen Temperaturen in einer exothermen Reaktion zu Urethanen reagieren. Dies bedeutet aber einen raschen Viskositätsanstieg und eine schlechte Verarbeitbarkeit. Für viele Einsatzgebiete, insbesondere für die Imprägnierung von elektrischen Wicklungen, sind solche Systeme deshalb unbrauchbar. Es ist auch bekannt, daß Polyole und Polyisocyanate häufig eine schlechte Mischbarkeit zeigen. Darüber hinaus wirken OH-Funktionen in Gegenwart von Aminen, welche oft als Härtungskatalysatoren eingesetzt werden, cokatalysierend auf die Trimerisierung von Isocyanaten (zu Isocyanuraten) und fördern daher kristalline Abscheidungen.

Im übrigen wird mit den härtbaren Polymermischungen nach der DE-OS 3 001 637 das Ziel verfolgt, die Wärmeformbeständigkeit bekannter Po-lyurethanformstoffe auf das Niveau von anhydridgehärteten Epoxidharzformstoffen anzuheben, wobei auf 1 Äquivalen Isocyanat 0,7 bis 1,4 Äquivalente Polyol und auf 1 Äquivalent Isocyanat 0,3 bis 1 Äquivalent Epoxid eingesetzt werden. Im Gegensatz dazu werden mit den erfindungsgemäßen polyolfreien Reaktionsharzmischungen OX/ICR-Formstoffe mechanisch verbessert, deren Wärmeformbeständigkeit weit über derjenigen von bekannten säureanhydridgehärteten Epoxidharzformstoffen liegt.

Aus der DE-OS 2 825 614 ist ein Verfahren zur Herstellung von vernetzten Polymeren bekannt, bei dem flüssige Epoxidverbindungen, welche mindestens zwei Epoxidgruppen im Molekül enthalten, mit Polyisocyanaten und gegebenenfalls mit Polyhydroxylverbindungen – in Gegenwart von Härtungskatalysatoren bei Temperaturen zwischen Raumtemperatur und 250 °C – umgesetzt werden. Bei diesem Verfahren werden aber ausschließlich saure Katalysatoren eingesetzt, es ist nämlich zwingend die Verwendung einer Kom-plexverbindung von $BF_3$ mit einem Ether, einer Phosphoniumverbindung oder mit Wasser, gegebenenfalls zusammen mit einer im Reaktionsgemisch löslichen Sn-, Zn- oder Fe-Verbindung, als Härtungskatalysator vorgeschrieben.

In den erfindungsgemäßen Reaktionsharzmischungen entfallen auf 1 Äquivalent Epoxid 0,2 bis 5 Äquivalente Isocyanat. Dies bedeutet, daß das Äquivalentverhältnis von Epoxid zu Isocyanat (EP:IC) 1:5 bis 5:1 beträgt.

In den erfindungsgemäßen Reaktionsharzmischungen sind die Polyisocyanate in Form von Isocyanatvorpolymerisaten enthalten. Derartige Verbindungen sind im Handel erhältlich, sie können aber auch nach bekannten Verfahren hergestellt werden.

Aus der DE-AS 2 737 338 ist beispielsweise eine flüssige Isocyanat-Vorpolymerisatmasse bekannt, die aus einem Umsetzungsprodukt von

(a) einem Isocyanatgemisch aus 65 bis 85 Gew.-% Diphenylmethandiisocyanat und 15 bis 35 Gew.-% Polymethylenpolyphenylisocyanaten einer Funktionalität von über 2 mit

(b) pro Äquivalent Isocyanatgemisch 0,0185 bis 0,15 Äquivalenten eines Polyoxyethylenglykols mit einem durchschnittlichen Molekulargewicht von 200 bis 600

besteht. Dieses bekannte Isocyanatvorpolymerisat, das ausschließlich durch Umsetzung eines Isocyanatgemisches erhalten wird, wird aber nicht für EP/IC-Harze verwendet, sondern es dient zur Herstellung von Polyurethanen.

Isocyanatvorpolymerisate sind auch aus der DE-OS 2 513 793 bekannt. Diese Polyisocyanate werden in der Weise hergestellt, daß ein Gemisch aus Methylenbrücken aufweisenden Polyphenylpolyisocyanaten, das 55 bis 85 Gew.-% Diphenylmethandiisocyanat enthält, mit 0,005 bis 0,35 Äqui-valenten eines Alkylendiols oder Polyoxyalkylen-diols je Äquivalent Isocyanatgruppe im Gemisch umgesetzt wird; bevorzugt werden dabei 0,05 bis 0,15 Äquivalente Alkylendiol verwendet, was einem Verbrauch von 5 bis 15% der Isocyanatgruppen entspricht. Auch diese Polyisocyanate dienen zur Herstellung von Polyurethanen.

Aus der US-PS 3 394 164 sind flüssige lagerstab-bile Isocyanatvorpolymerisate bekannt, die durch Umsetzung von Diphenylmethandiisocyanat mit 2 bis 10 Gew.-% Dipropylenglykol in Gegenwart geringer Mengen Phosphorsäure (0,001 bis 0,1 Gew.-%, bezogen auf das Isocyanat) bei Temperaturen von 40 bis 110 °C hergestellt werden.

Diese Vorpolymerisate, die eine Funktionalität von 2 besitzen und niedrigviskos sind, dienen ebenfalls zur Herstellung von Polyurethanen.

Bei der Herstellung der Isocyanatvorpolymerisate können sowohl niedermolekulare monomere Diole, wie Ethylenglykol, Propylenglykol und 1,6-Hexandiol, als auch höhermolekulare oligomere Diole, wie Polyoxyalkylendiole, die durch Polymerisation eines Alkylendiols in Gegenwart von Wasser entstehen, verwendet werden. Bevorzugte Verbindungen dieses Typs sind Polyoxyethylenglykol und Polyoxypropylenglykol.

Die erfindungsgemäßen Reaktionsharzmi-schungen enthalten vorzugsweise Isocyanatvor-polymerisate in Form von Umsetzungsprodukten von Isocyanatgemischen aus Diphenylmethandi-isocyanat und Polymethylenpolyphenylisocyana-ten mit Alkylendiolen bzw. mit Polyoxyalkylenglykolen. Die verwendeten Polyoxyalkylenglykole weisen dabei vorteilhaft eine mittlere Molmasse von 100 bis 1000 auf, vorzugsweise von 200 bis 800. Der Gehalt der Isocyanatgemische an Poly-methylenpolyphenylisocyanaten beträgt vorzugs-weise bis zu 35 Gew.-%.

In den erfindungsgemäßen Reaktionsharzmischungen können die Isocyanatvorpolymerisate allein oder im Gemisch mit anderen Polyisocyana-ten eingesetzt werden. Als Mischungskomponen-ten sind relativ niedrigviskose aliphatische, cy-cloaliphatische oder aromatische Isocyanate be-sonders gut geeignet. Bevorzugt werden dabei Isomerengemische aus 4,4'- und 2,4'-Diphenylmethandiisocyanat und Gemische von flüssigen Po-lyisocyanaten mit höhermolekularen Polyisocya-naten oder Carbodiimid-Polyisocyanaten einge-setzt. Weitere verwendbare Polyisocyanate sind beispielsweise Hexan-1,6-diisocyanat, Cyclohexan-1,3-diisocyanat und Isomere, 4,4'-Dicyclohe-xylmethandiisocyanat, 3-Isocyanatomethyl-3,5,5-trimethylcyclohexylisocyanat, 1,3-Dimethylben-zol-$\omega,\omega'$-diisocyanat und Isomere, 1-Methylbenzol-2,4-diisocyanat und Isomere, Naphthalin-1,4-diisocyanat, Diphenylether-4,4'-diisocyanat und Isomere, Diphenylsulfon-4,4'-diisocyanat und Isomere sowie tri- oder höherfunktionelle Isocyanate, wie beispielsweise 3,3',4,4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen endständige freie Isocyanatgruppen und enthalten Uretimin-, Uretdion- und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

Als Polyepoxide sind relativ niedrigviskose aliphatische, cycloaliphatische oder aromatische Epoxide sowie deren Mischungen besonders gut geeignet. Bevorzugt werden Bisphenol-A-diglycidylether, Bisphenol-F-diglycidylether, 3,4-Epoxy-cyclohexylmethyl-3',4'-epoxycyclohexancarboxylat, Polyglycidylether von Phenol/Formaldehyd- bzw. Kresol/Formaldehyd-Novolak und Diglycidylester von Phthal-, Isophthal- oder Terephthalsäure eingesetzt. Weitere verwendbare Polyepoxide sind beispielsweise hydrierte Bisphenol-A- bzw. Bisphenol-F-diglycidylether, Hydantoinepoxidharze, Triglycidylisocyanurat, Triglycidyl-p-aminophenol, Tetraglycidyldiaminodiphenylmethan, Tetraglycidyldiaminodiphenylether und Tetrakis(4-glycidoxyphenyl)-ethan sowie Epoxide, welche im «Handbook of Epoxy Resins» von Henry Lee and Kris Neville, McGraw-Hill Book Company, 1967, und in der Monographie von Henry Lee «Epoxy Resins», American Chemical Society, 1970, beschrieben sind.

Die erfindungsgemäßen Reaktionsharzmischungen können auch Komponenten enthalten, die im allgemeinen an den chemischen Reaktionen, die zu den OX/ICR-Formstoffen führen, nicht beteiligt sind. Als derartige Füllstoffe eignen sich mineralische und faserförmige Füllstoffe, wie Quarzmehl, Quarzgut, Aluminiumoxid, Glaspulver, Glimmer, Kaolin, Dolomit, Graphit und Ruß, sowie Kohlefasern, Glasfasern und Textilfasern. Farbstoffe, Stabilisatoren und Haftvermittler sowie andere Additive üblicher Art können den Reaktionsharzmischungen ebenfalls zugesetzt werden.

Für die erfindungsgemäßen EP/IC-Harzmischungen spielen die bei der Vernetzung die OX- und ICR-Ringbildung fördernden Reaktionsbeschleuniger bzw. (Härtungs-)Katalysatoren eine bedeutende Rolle. Eingesetzt werden dabei tert. Amine und Imidazole. Als tert. Amine eignen sich beispielsweise Tetramethylethylendiamin, Dimethyloctylamin, Dimethylaminoethanol, Dimethylbenzylamin, 2,4,6-Tris(dimethylaminomethyl)-phenol, N,N'-Tetramethyldiaminodiphenylmethan, N,N'-Dimethylpiperazin, N-Methylmorpholin, N-Methylpiperidin, N-Ethylpyrrolidin, 1,4-Diazabicyclo(2,2,2)-octan und Chinoline. Geeignete Imidazole sind beispielsweise 1- Methylimidazol, 2-Methylimidazol, 1,2-Dimethylimidazol, 1,2,4,5-Tetramethylimidazol, 2-Ethyl-4-methyl-imidazol, 1-Cyanoethyl-2-phenylimidazol und 1-(4,6-Diamino-s-triazinyl-2-ethyl)-2-phenylimidazol.

Als Reaktionsbeschleuniger für die EP/IC-Harzmischungen eignen sich ferner Oniumsalze von tert. Aminen und Imidazolen, d.h. Oniumsalze mit N als Zentralatom. Beispiele für verwendbare Oniumsalze sind: Tetraethylammoniumchlorid, Tetraethylammoniumbromid, Octyltrimethylammoniumbromid, Benzyltrimethylammoniumchlorid, N-Ethylmorpholiniumbromid, 2-Ethyl-4-methyl-imid-azoliumbromid, N-Ethylmorpholiniumtetraphenylborat, 1,2-Dimethylimidazoliumtetraphenylborat und Tetrabutylammoniumtetraphenylborat.

Die genannten Katalysatoren führen bei der thermischen Härtung der erfindungsgemäßen EP/IC-Harze, die vorzugsweise bei Temperaturen von Raumtemperatur bis 200 °C erfolgt, zu thermisch-mechanisch hochwertigen OX/ICR-Formstoffen. Sie katalysieren die Härtungsreaktion allerdings schon bei niedrigen Temperaturen und führen so zu einer nicht in allen Fällen genügenden Gebrauchsdauer, was die Verarbeitung der Reaktionsharze erschweren kann. Wegen der guten Mischbarkeit der Ausgangskomponenten der Reaktionsharzmischungen lassen sich diese Katalysatoren jedoch in all den Fällen verwenden, in denen eine Verarbeitung nach dem Zweikomponentenprinzip erfolgt und die Mischung der zwei Komponenten im statischen Mischrohr durchgeführt wird.

Bevorzugt werden in den erfindungsgemäßen EP/IC-Harzmischungen daher latente Härtungskatalysatoren eingesetzt, die eine ausreichende Gebrauchsdauer gewährleisten. Als derartige Katalysatoren, die auch als latente Reaktionsbeschleuniger bezeichnet werden, eignen sich insbesondere Additionskomplexe von Bortrihalogeniden mit tert. Aminen und Imidazolen, beispielsweise die in der DE-PS 2 655 367 beschriebenen Additionskomplexe von Bortrichlorid und tert. Aminen der allgemeinen Formel $BCl_3 \cdot NR^1R^2R^3$, in der $R^1$, $R^2$ und $R^3$ gleiche oder verschiedene aliphatische, aromatische, heterocyclische oder arylaliphatische Reste sind, die paarweise auch Bestandteil von heterocyclischen Ringen sein können. Geeignet sind auch die analogen Komplexe des Bortrifluorids der Formel $BF_3 \cdot NR^1R^2R^3$ wobei $R^1$, $R^2$ und $R^3$ die vorstehend angegebene Bedeutung haben. Spezielle Beispiele für geeignete tert. Amine der $BF_3$- und $BCl_3$-Komplexe sind Octyldimethylamin und Dimethylbenzylamin. Auch Morpholinverbindungen und Imidazole, insbesondere N-Methylmorpholin, N-Ethylmorpholin, 1,2-Dimethylimidazol und 1-Benzyl-2-phenylimidazol, sind zur Bildung von $BCl_3$- bzw. $BF_3$-Komplexen geeignet.

Der Gehalt des Härtungskatalysators in den EP/IC-Harzen beträgt vorteilhaft 0,01 bis 5 Gew.-%, vorzugsweise 0,25 bis 2,5 Gew.-%, bezogen auf die Masse der Harzmatrix. Durch die Art und durch die Konzentration des Härtungskatalysators kann dabei die Härtungstemperatur und die Härtungsdauer beeinflußt werden.

Die Isocyanatvorpolymerisate enthaltenden erfindungsgemäßen Reaktionsharzmischungen ergeben in Abwesenheit von Katalysatoren lagerstabile Mischungen, die sich über Wochen ohne nennenswerten Viskositätsaufbau und ohne Abscheidung kristalliner Substanzen lagern lassen. Auch bei der Verwendung latenter Härtungsbeschleuniger werden Reaktionsharzsysteme mit langer Gebrauchsdauer und Viskositätsstabilität erhalten. Diese Harzmischungen können sowohl nach Verfahren wie Vakuumverguß und VPI-Technik als auch spritzgußanalog verarbeitet werden. Derartige Verarbeitungsverfahren sind für Epoxidharze in der Elektrotechnik gängige Methoden.

Die nach thermischer Härtung aus den – Isocyanatvorpolymerisate enthaltenden – EP/IC-Harzen resultierenden OX/ICR-Formstoffe zeichnen sich durch sehr gute mechanische Eigenschaften und gute Temperaturwechselbeständigkeit bei gleichzeitiger hoher Wärmeformbeständigkeit aus. Sie eignen sich daher insbesondere zur Imprägnierung und Einbettung elektrischer Wicklungen für rotierende Maschinen und Transformatoren. Die erfindungsgemäßen Reaktionsharzmischungen eignen sich in ausgezeichneter Weise auch zur Herstellung von mechanisch hochfesten Isolierbauteilen, wie Isolatoren, Halte- und Stützelementen sowie Durchführungen in der Schaltungs- und Energieübertragungstechnik. Ein weiteres bevorzugtes Anwendungsgebiet ist die Einbettung und Umhüllung von elektronischen Bauteilen.

Anhand von Ausführungsbeispielen soll die Erfindung noch näher erläutert werden.

Beispiele 1 bis 4

Ein Bisphenol-F-bisglycidylether (BFBG, Ep-Wert = 0,62 $\frac{mol}{100\ g}$, $\eta_{50°C}$ = 1100 mPA · s) wird zusammen mit einem kommerziellen Isocyanatvorpolymerisat auf der Basis von Diphenylmethandiisocyanat und Polypropylenglykol (Isocyanat A; NCO-Wert = 0,59 $\frac{mol}{100\ g}$, $\eta_{25°C}$ = 140 mPa · s), einem bei Raumtemperatur flüssigen Isomerengemisch von Diphenylmethandiisocyanat (MDI; NCO-Wert = 0,79 $\frac{mol}{100\ g}$, $\eta_{25°C}$ = 15 mPa · s) und 65% Quarzmehl (16900 M/cm²) gemischt und während 1 h bei 80°C/1mbar entgast. Anschließend wird auf 50°C abgekühlt, der Reaktionsbeschleuniger (RKB), beispielsweise BCl₃ · DMBA (BCl₃-Addukt von Dimethylbenzylamin) oder CEPI (1-Cyanoethyl-2-phenylimidazol), zugegeben und bei 50°C/l mbar eine weitere Stunde entgast. Die Zusammensetzung der Reaktionsharzmischungen ist in Tabelle 1 angegeben. Die Reaktionsharzmischungen werden im Vakuum in auf 100°C vorgeheizte Formen gegossen und während 4 h bei 140°C und 16 h bei 200°C zu Formstoffen gehärtet. An den so hergestellten Formstoffen wurde nach DIN 53 453 die Schlagzähigkeit (SZ), nach DIN 53 452 die Biegefestigkeit (BF) und nach DIN 53 458 die Wärmeformbeständigkeit nach Martens ($T_M$) bestimmt. Die erhaltenen Werte sind in Tabelle 2 zusammengefaßt.

Tabelle 1

Zusammensetzung der Reaktionsharzmischungen (MT = Masseteile)

| Beispiel | BFBG MT | Isocyanat A MT | MDI MT | RKB MT | Füllstoff MT |
|---|---|---|---|---|---|
| 1 | 100 | 67 | 28 | 2,9 BCl₃ · DMBA | 360 |
| 2 | 100 | 67 | 28 | 2,0 CEPI | 360 |
| 3 | 100 | 161 | 87 | 5,2 BCl₃ · DMBA | 651 |
| 4 | 100 | 161 | 87 | 3,5 CEPI | 651 |

Tabelle 2

Thermisch-mechanische Eigenschaften der OX/ICR-Formstoffe

| Beispiel | $T_M$ °C | SZ $\frac{Nmm}{mm^2}$ | BF $\frac{N}{mm^2}$ |
|---|---|---|---|
| 1 | 176 | 13±2 | 137±13 |
| 2 | 150 | 18±2 | 155± 8 |
| 3 | 206 | 11±2 | 121± 8 |
| 4 | 219 | 10±2 | 128±16 |

Beispiele 5 und 6

Ein Bisphenol-F-bisglycidylether (BFBG, Ep-Wert = 0,62 $\frac{mol}{100\,g}$, $\eta_{50°C}$ = 1100 mPa · s) wird zusammen mit einem kommerziellen Isocyanatvorpolymerisat auf der Basis von Diphenylme-thandiisocyanat und Polypropylenglykol (Isocya-nat B; NCO-Wert = 0,54 $\frac{mol}{100\,g}$, $\eta_{25°C}$ = 650

mPa · s), einem bei Raumtemperatur flüssigen Isomerengemisch von Diphenylmethandiisocyanat (MDI) und 65% Quarzmehl analog den Beispielen 1 bis 4 aufbereitet und in Gegenwart eines Reaktionsbeschleunigers (RKB) zu Formstoffen verarbeitet. Die Zusammensetzung der Reaktionsharzmischungen ist aus Tabelle 3 ersichtlich. Wie in den Beispielen 1 bis 4 beschrieben, wurden an den gehärteten Formstoffen die thermisch-mechanischen Eigenschaften gemessen, sie sind in Tabelle 4 zusammengestellt.

Tabelle 3

Zusammensetzung der Reaktionsharzmischungen (MT = Masseteile)

| Beispiel | BFBG MT | Isocyanat B MT | MDI MT | RKB MT | Füllstoff MT |
|---|---|---|---|---|---|
| 5 | 100 | 122 | 122 | 5,2 BCl$_3$ · DMBA | 675 |
| 6 | 100 | 122 | 122 | 3,4 CEPI | 675 |

Tabelle 4

Thermisch-mechanische Eigenschaften der OX/ICR-Formstoffe

| Beispiel | T$_M$ °C | SZ $\frac{Nmm}{mm^2}$ | BF $\frac{N}{mm^2}$ |
|---|---|---|---|
| 5 | 220 | 10±2 | 119±10 |
| 6 | 215 | 11±2 | 123± 8 |

Beispiele 7 und 8

Ein Bisphenol-F-bisglycidylether (BFBG, Ep-Wert = 0,62 $\frac{mol}{100\,g}$, $\eta_{50°C}$ = 1100 mPa · s) wird zusammen mit einem kommerziellen Isocyanatvorpolymerisat auf der Basis von Polymethylen-polyphenylisocyanaten und Polyethylenglykol (Isocyanat C; NCO-Wert = 0,63 $\frac{mol}{100\,g}$, $\eta_{25°C}$ = 260

mPa · s), einem bei Raumtemperatur flüssigen Isomerengemisch von Diphenylmethandiisocyanat (MDI) und 65% Quarzmehl analog den Beispielen 1 bis 4 aufbereitet und in Gegenwart eines Reaktionsbeschleunigers (RKB) zu Formstoffen verarbeitet. Die Zusammensetzung der Reaktionsharzmischungen ist in Tabelle 5 angegeben. Wie in den Beispielen 1 bis 4 beschrieben, wurden an den gehärteten Formstoffen die thermisch-mechanischen Eigenschaften gemessen, sie sind in Tabelle 6 zusammengestellt.

Tabelle 5

Zusammensetzung der Reaktionsharzmischungen (MT = Masseteile)

| Beispiel | BFBG MT | Isocyanat C MT | MDI MT | RKB MT | Füllstoff MT |
|---|---|---|---|---|---|
| 7 | 100 | 52 | 38 | 2,9 BCl$_3$ · DMBA | 352 |
| 8 | 100 | 52 | 38 | 1,9 CEPI | 352 |

Tabelle 6

Thermisch-mechanische Eigenschaften
der OX/ICR-Formstoffe

| Beispiel | $T_M$ °C | SZ $\dfrac{Nmm}{mm^2}$ | BF $\dfrac{N}{mm^2}$ |
|---|---|---|---|
| 7 | 185 | $12 \pm 2$ | $132 \pm 8$ |
| 8 | 160 | $14 \pm 3$ | $140 \pm 10$ |

Beispiel 9

Ein Bisphenol-F-bisglycidylether (BFBG, Ep-Wert = $0{,}62 \dfrac{mol}{100\ g}$, $\eta_{50°C}$ = 1100 mPa · s) wird zusammen mit einem kommerziellen Isocyanatvorpolymerisat auf der Basis von Diphenylmethandiisocyanat und Polypropylenglykol (Isocyanat A; NCO-Wert = $0{,}59 \dfrac{mol}{100\ g}$, $\eta_{25°C}$ = 140 mPa · s) und 65% Dolomit (Korngröße: 98% $<63\ \mu m$) analog den Beispielen 1 bis 4 aufbereitet und in Gegenwart eines Reaktionsbeschleunigers (RKB) zu Formstoffen verarbeitet. Die Zusammensetzung der Reaktionsharzmischung ist aus Tabelle 7 ersichtlich. Wie in den Beispielen 1 bis 4 beschrieben, wurden an den gehärteten Formstoffen die thermisch-mechanischen Eigenschaften gemessen, sie sind in Tabelle 8 zusammengestellt.

Tabelle 7

Zusammensetzung der Reaktionsharzmischungen (MT = Masseteile)

| Beispiel | BFBG MT | Isocyanat A MT | RKB MT | Füllstoff MT |
|---|---|---|---|---|
| 9 | 100 | 280 | 5,7 $BCl_3 \cdot DMBA$ | 705 |

Tabelle 8

Thermisch-mechanische Eigenschaften
des OX/ICR-Formstoffes

| Beispiel | $T_M$ °C | SZ $\dfrac{Nmm}{mm^2}$ | BF $\dfrac{N}{mm^2}$ |
|---|---|---|---|
| 9 | 204 | $8 \pm 2$ | $90 \pm 13$ |

Beispiel 10

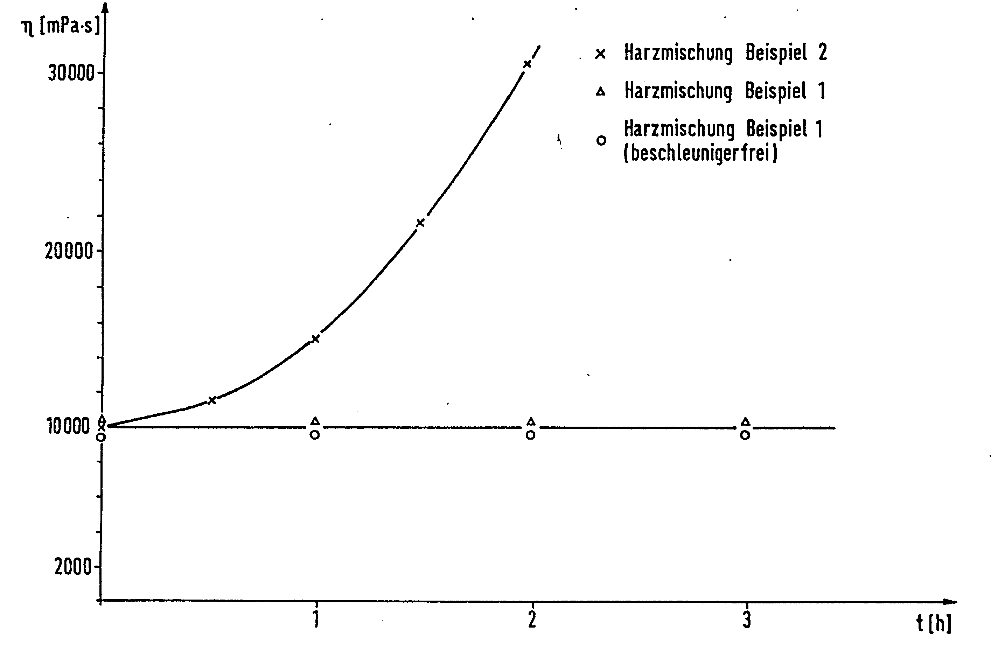

Ein Bisphenol-F-bisglycidylether (BFNG, Ep-Wert = $0{,}62 \dfrac{mol}{100\ g}$, $\eta_{50°C}$ = 1100 mPA · s) wird zusammen mit einem kommerziellen Isocyanatvorpolymerisat auf der Basis von Diphenylmethandiisocyanat und Polypropylenglykol (Isocyanat A; NCO-Wert = $0{,}59 \dfrac{mol}{100\ g}$, $\eta_{25°C}$ = 140 mPa · s), einem bei Raumtemperatur flüssigen Isomerengemisch von Diphenylmethandiisocyanat (MDI) und 65% Quarzmehl gemischt und während 1 h bei 80 °C/l mbar entgast. Anschließend wird auf 50 °C abgekühlt und der Reaktionsbeschleuniger zugegeben. Dann wird nach kurzem Homogenisieren der Viskositätsaufbau bei 50 °C in einem Haake-Rotovisko RV 3, Meßsystem SV II, bestimmt. Die Mischungszusammensetzung entspricht derjenigen aus den Beispielen 1 und 2. Der Viskositätsaufbau wird in Fig. 1 mit demjenigen einer beschleunigerfreien Harzmischung entsprechend Beispiel 1 verglichen.

Beispiel 11

Entsprechend Beispiel 1 wird eine beschleunigerhaltige Reaktionsharzmischung aufbereitet.

Die 50 °C warme Harzmischung wird anschließend in den Vorrratsbehälter einer Spritzgießanlage gegossen. Dann werden mittels eines geeigneten Schließwerkzeuges mit folgenden Verarbeitungsparametern Normstäbe gespritzt:

Formtemperatur: 120 °C; Spritzdruck: 3 bar; Formschließzeit: 10 min.

Die entformten Normstäbe werden anschließend 16 h bei 200 °C nachgehärtet. Die Formstoffeigenschaften sind in Tabelle 9 zusammengefaßt.

Tabelle 9

Thermisch-mechanische Eigenschaften der OX/ICR-Formstoffe

| Beispiel | $T_M$ °C | SZ $\dfrac{Nmm}{mm^2}$ | BF $\dfrac{N}{mm^2}$ |
|---|---|---|---|
| 11 | 167 | $123 \pm 8$ | $11 \pm 2$ |

## Beispiel 12

Modelloberspannungswicklungen für Trockentransformatoren wurden aus Polyimidfolie (25 µm dick, 56 mm breit) als Lagenisolierung und Aluminiumbändern (0,1 mm dick, 50 mm breit) hergestellt und daraus Modellspulen, bestehend aus 4 Wicklungen, in einer Gießform aufgebaut. Die mit den erfindungsgemäßen Reaktionsharzmischungen zu vergießenden Zwischenräume zwischen den einzelnen Spulen sowie zwischen den Spulen und der Gießformwand betrugen 6 bis 8 mm, am Einguß ca. 15 mm. Die Modellspulen wurden bei 80 °C/1mbar getrocknet und mit der in Beispiel 1 beschriebenen Harzmischung, nach der ebenfalls in Beispiel 1 beschriebenen Aufbereitung, im Vakuum vergossen und anschließend wurde das Gießharz während ca. 90 min bei 130 bis 140 °C unter Überdruck mittels Wicklungsheizung geliert. Die Modellspulen wurden dann entformt und sofort 6 h bei 150 °C und weitere 15 h bei 180 °C getempert. Auf diese Weise hergestellte Modellspulen überstehen ohne Rißbildung Temperaturcyclen von +180 °C bis −70 °C.

## Patentansprüche

1. Hitzehärtbare Reaktionsharzmischungen, enthaltend
a) polyfunktionelle Epoxide
b) polyfunktionelle Isocyanate und
c) einen Reaktionsbeschleuniger sowie gegebenenfalls
d) übliche Additive und/oder Füllstoffe,
dadurch gekennzeichnet, daß
– die Reaktionsharzmischungen als polyfunktionelle Isocyanate Isocyanatvorpolymerisate in Form von Umsetzungsprodukten aus Diphenylmethandiisocyanat und einem Diol oder aus einem Isocyanatgemisch aus Diphenylmethandiisocyanat und Polymethylenpolyphenylisocyanaten mit einer Funktionalität größer 2 und einem Diol enthalten, wobei auf 1 Äquivalent Isocyanat jeweils 0,01 bis 0,35 Äquivalente, vorzugsweise 0,05 bis 0,2 Äquivalente, des Diols entfallen,
– auf 1 Äquivalent Epoxid 0,2 bis 5 Äquivalente Isocyanat entfallen und

– der Reaktionsbeschleuniger ein tert. Amin oder ein Imidazol ist.

2. Reaktionsharzmischungen nach Anspruch 1, dadurch gekennzeichnet, daß sie Isocyanatvorpolymerisate in Form von Umsetzungeprodukten von Isocyanatgemischen aus Diphenylmethandiisocyanat und Polymethylenpolyphenylisocyanaten mit Alkylendiolen enthalten.

3. Reaktionsharzmischungen nach Anspruch 1, dadurch gekennzeichnet, daß sie Isocyanatvorpolymerisate in Form von Umsetzungsprodukten von Isocyanatgemischen aus Diphenylmethandiisocyanat und Polymethylenpolyphenylisocyanaten mit Polyoxyalkylenglykolen enthalten.

4. Reaktionsharzmischungen nach Anspruch 3, dadurch gekennzeichnet, daß die Polyoxyalkylenglykole eine mittlere Molmasse von 100 bis 1000 besitzen, vorzugsweise von 200 bis 800.

5. Reaktionsharzmischungen nach einem oder mehreren der Ansprüche 1 bis 4, dadurch gekennzeichnet, daß die Isocyanatgemische bis zu 35 Gew.-% Polymethylenpolyphenylisocyanate enthalten.

6. Reaktionsharzmischungen nach einem oder mehreren der Ansprüche 1 bis 5, dadurch gekennzeichnet, daß sie einen latenten Reaktionsbeschleuniger enthalten.

7. Reaktionsharzmischungen nach einem oder mehreren der Ansprüche 1 bis 6, dadurch gekennzeichnet, daß der Gehalt des Reaktionsbeschleunigers 0,01 bis 5 Gew.-%, vorzugsweise 0,25 bis 2,5 Gew.-%, beträgt.

8. Reaktionsharzmischungen nach einem oder mehreren der Ansprüche 1 bis 7, dadurch gekennzeichnet, daß sie bei Temperaturen von Raumtemperatur bis 200 °C vernetzt und gehärtet werden.

9. Reaktionsharzmischungen nach einem oder mehreren der Ansprüche 1 bis 8, dadurch gekennzeichnet, daß sie als Füllstoff Quarzmehl, Quarzgut, Aluminiumoxid oder Dolomit enthalten.

10. Verwendung der Reaktionsharzmischungen nach einem oder mehreren der Ansprüche 1 bis 9 zur Herstellung von Reaktionsharzformstoffen für elektrische und elektronische Geräte und Bauteile.

11. Verwendung der Reaktionsharzmischungen nach einem oder mehreren der Ansprüche 1 bis 9 zur Imprägnierung und Einbettung von elektrischen Wicklungen.

12. Verwendung der Reaktionsharzmischungen nach einem oder mehreren der Ansprüche 1 bis 9 zum Verguß und zur Umhüllung von elektronischen Bauteilen.

13. Verwendung der Reaktionsharzmischungen nach einem oder mehreren der Ansprüche 1 bis 9 zur Herstellung von Isolierbauteilen für die Schaltungs- und Energieübertragungstechnik.

## Claims

1. Thermosetting reaction resin mixtures containing:
   a) polyfunctional epoxides
   b) polyfunctional isocyanates, and
   c) a reaction accelerator and also, if the case arises,
   d) usual additives and/or fillers,
characterised in that
   — the reaction resin mixtures contain as polyfunctional isocyanates, isocyanate prepolymers in the form of reaction products of diphenylmethane diisocyanate and a diol or of an isocyanate mixture of diphenylmethane diisocyanate and polymethylene polyphenylisocyanates with a functionality greater than 2, and a diol, wherein 0.01 to 0.35 equivalents, preferably 0.05 to 0.2 equivalents, of the diol are present for each 1 equivalent of isocyanate,
   — 0.2 to 5 equivalents of isocyanate are present for equivalent of epoxide,
   — and the reaction accelerator is a tert. amine or an imidazole.

2. Reaction resin mixtures according to claim 1, characterised in that they contain isocyanate prepolymers in the form of reaction products of isocyanate mixtures of diphenylmethane diisocyanate and polymethylene polyphenyl isocyanates with alkylene diols.

3. Reaction resin mixtures according to claim 1, characterised in that they contain isocyanate prepolymers in the form of reaction products of isocyanate mixtures of diphenylmethane diisocyanate and polymethylene polyphenyl isocyanates with polyoxyalkylene glycols.

4. Reaction resin mixtures according to claim 3, characterised in that the polyoxyalkylene glycols have an average molecular weight of 100 to 1000, preferably 200 to 800.

5. Reaction resin mixtures according to one or several of claims 1 to 4, characterised in that the isocyanate mixtures contain up to 35% by weight polymethylene polyphenyl isocyanates.

6. Reaction resin mixtures according to one or several of claims 1 to 5, characterised in that they contain a latent reaction accelerator.

7. Reaction resin mixtures according to one or several of claims 1 to 6, characterised in that the amount of reaction accelerator is 0.01 to 5% by weight, preferably 0.25 to 2.5% by weight.

8. Reaction resin mixtures according to one or several of claims 1 to 7, characterised in that they are cross-linked and cured at temperatures from ambient temperature to 200°C.

9. Reaction resin mixtures according to one or several of claims 1 to 8, characterised in that they contain as filler, quartz powder, fused quartz, aluminium oxide or dolomite.

10. Use of the reaction resin mixtures according to one or several of claims 1 to 9 to produce reaction resin moulded materials for electrical and electronic equipment and components.

11. Use of the reaction resin mixtures according to one or several of claims 1 to 9 to impregnate and embed electrical windings.

12. Use of the reaction resin mixtures according to one or several of claims 1 to 9 to cast and case electronic components.

13. Use of the reaction resin mixtures according to one or several of claims 1 to 9 to produce insulating components for switching technology and power transmission technology.

## Revendications

1. Compositions thermodurcissables de résines de réaction, contenant
   a) des époxydes polyfunctionnels
   b) des isocyanates polyfunctionnels et
   c) un accélérateur de réaction ainsi que, le cas échéant,
   d) des additifs habituels et/ou des charges habituelles,
caractérisées en ce que,
   — les compositions de résines de réaction contiennent, comme isocyanates polyfonctionnels, des prépolymères d'isocyanate sous la forme de produits de réaction de diisocyanate de diphénylméthane et d'un diol ou d'un mélange d'isocyanates, constitué de diisocyanate de diphénylméthane et d'isocyanates de polyméthylènepolyphényle ayant une fonctionnalité supérieure à 2 et d'un diol, de 0,01 à 0,35 équivalent et, de préférence, de 0,05 à 0,2 équivalent du diol étant présent pour 1 équivalent de l'isocyanate,
   — de 0,2 à 5 équivalents d'isocyanate sont présents pour 1 équivalent d'époxyde, et
   — l'accélérateur de réaction est une amine tertiaire ou un imidazole.

2. Compositions de résines de réaction suivant la revendication 1, caractérisées en ce qu'elles contiennent des prépolymères d'isocyanate sous la forme de produits de réaction de mélanges d'isocyanates, constitués de diisocyanate de diphénylméthane et d'isocyanates de polyméthylènepolyphényle, sur des alcoylènediols.

3. Compositions de résines de réaction suivant la revendication 1, caractérisées en ce qu'elles contiennent des prépolymères d'isocyanate, sous la forme de produits de réaction de mélanges d'isocyanates, constitués de diisocyanate de diphénylméthane et d'isocyanates de polyméthylènepolyphényle, sur des polyoxyalcoylèneglycols.

4. Compositions de résines de réaction suivant la revendication 3, caractérisées en ce que les polyoxyalcoylèneglycols ont une masse moléculaire moyenne de 100 à 1000 et, de préférence, de 200 à 800.

5. Compositions de résines de réaction suivant l'une ou plusieurs des revendications 1 à 4, caractérisées en ce que les mélanges d'isocyanate contiennent jusqu'à 35% en poids d'isocyanates de polyméthylènepolyphényle.

6. Compositions de résines de réaction suivant l'une ou plusieurs des revendications 1 à 5, caractérisées en ce qu'elles contiennent un accélérateur latent de réaction.

7. Compositions de résines de réaction suivant l'une ou plusieurs des revendications 1 à 6, caractérisées en ce que la teneur de l'accélérateur de réaction est comprise entre 0,01 et 5% en poids et, de préférence, entre 0,25 et 2,5% en poids.

8. Compositions de résines de réaction suivant l'une ou plusieurs des revendications 1 à 7, caractérisées en ce qu'elles sont réticulées et durcies à des températures allant de la température ambiante à 200 °C.

9. Compositions de résines de réaction suivant l'une ou plusieurs des revendications 1 à 8, caractérisées en ce qu'elles contiennent comme charge de la poudre de quartz, de la silice fondue, de l'oxyde d'aluminium ou de la dolomite.

10. Utilisation des compositions de résines de réaction suivant l'une ou plusieurs des revendications 1 à 9, pour la production de produits moulés de résines de réaction pour des appareils et des composants électriques et électroniques.

11. Utilisation des compositions de résines de réaction suivant l'une ou plusieurs des revendications 1 à 9 pour l'imprégnation et l'enrobage d'enroulements électriques.

12. Utilisation des compositions de résines de réaction suivant l'une ou plusieurs des revendications 1 à 9 pour le scellement et l'enrobage de composants électroniques.

13. Utilisation des compositions de résines de réaction suivant l'une ou plusieurs des revendications 1 à 9 pour la production d'éléments isolants, dans la technique de la commutation et dans la technique du transport de l'énergie.

EP 0 129 799 B1